# EUROPEAN PATENT APPLICATION

(11) **EP 4 769 195 A1**
(43) Date of publication of application: **01.07.2026**
(21) Application number: 24223875.6
(22) Date of filing: 31.12.2024
(51) Int. Cl.: G06F 21/64, H04L 9/32, H04L 9/00, H04L 9/40

(54) **SECURING PROOF-OF-WORK INTEGRITY**

(71) Applicant: Greennet Energy sp. z o. o., 87-100 Torun (PL)
(72) Inventor: Lukkaroinen, Toni, 28330 Pori (FI)
(74) Representative: Godlewski, Piotr

(57) **Abstract**

The present invention relates to a method for enhancing the security and integrity of Proof-of-Work (PoW) systems in blockchain networks. Traditional PoW validation relies on verifying a valid nonce, but this approach is vulnerable to manipulation, as it does not independently confirm the entire computational process. The invention proposes a novel solution that securely validates the full PoW computation, ensuring that miners perform the intended algorithmic steps rather than exploiting shortcuts or using nonces derived from different algorithms. By embedding cryptographic proofs within the PoW verification process, the invention prevents tampering and manipulation, enhancing the transparency, security, and trustworthiness of PoW-based blockchain systems. This method strengthens the consensus mechanism and protects the network from malicious actors, ensuring the integrity of the blockchain.

## Description

### FIELD OF THE INVENTION

The present invention relates to the field of cryptographic blockchain technology, with a particular focus on improving the integrity of Proof-of-Work (PoW) mechanisms. Specifically, it addresses the transfer and validation of PoW hashes in distributed networks, enabling streamlined verification of computational effort and robust consensus in decentralized systems.

### BACKGROUND TO THE INVENTION

In Bitcoin and other PoW blockchains, miners solve cryptographic puzzles to add new blocks, involving the discovery of a nonce. This nonce, when combined with block data and processed through a hashing algorithm, produces a hash that meets the network's difficulty target. Nodes validate the block by recalculating the hash using the provided nonce. However, nonce-based validation has security limitations, as multiple valid nonces can lead to valid block and valid nonce can be found without doing the actual proof of work with nonce guessing methods, allowing attackers to manipulate the process without detection. This reduces transparency and increases the risk of exploits.

We tested this vulnerability using Pyrinhash V1 and V2 algorithms, mining with one and generating nonces valid for the other. This showed that a valid nonce could be created without the intended computation, exposing flaws in nonce-based validation. To address this, we developed an invention that ensures the integrity of the entire PoW process by securely validating the entire hash, preventing manipulation of intermediate steps and misuse of nonces from different algorithms. This solution strengthens the security and trustworthiness of PoW-based blockchain systems.

CN112907246A discloses a block chain consensus protocol implementation method and system based on a BFT protocol and a PoW mechanism. The method comprises the steps: 1, initializing a block chain consensus protocol which comprises participant miners in the protocol, a committee composed of miners, and honest miners and malicious miners preset in the committee; 2, the miner solves the problem of the current committee so as to obtain the qualification of entering the next committee; 3, the committee verifies the question answer and then takes the question answer as the input of a BFT protocol, and after a block is obtained, the legality of the block is verified; and 4, when the answer to the difficult problem reaches a preset threshold value, the committee rotates. According to the method, the problems of high transaction delay and low throughput of a block chain consensus protocol only based on a PoW mechanism are solved; compared with other block chain consensus protocols based on a BFT protocol and a PoW mechanism, the block chain consensus protocol does not interrupt the ongoing consensus process during committee rotation, so that the block chain consensus protocol has better performance, these are different form the problem solved by the present invention.

### PURPOSE OF THE INVENTION

The purpose of this invention is to provide a more secure and reliable method for validating Proof-of-Work (PoW) in blockchain systems, specifically by ensuring the integrity of the entire computation process rather than relying solely on the validity of the nonce. In current blockchain systems that utilize PoW, the process of validation is based on the discovery of a valid nonce that, when combined with other block data, results in a hash that meets the network's target difficulty. However, this validation mechanism is vulnerable to manipulation, as it does not independently confirm the correctness of the entire PoW process.

By addressing the limitations and vulnerabilities associated with nonce-based validation, the invention aims to enhance the security of PoW-based systems, making it more difficult for malicious actors to manipulate the hashing process or use alternative shortcuts. This invention proposes a method for securely and efficiently validating the entire PoW hash to ensure that miners have executed the full intended computation, thereby preserving the integrity of the blockchain network and preventing exploitation or attacks. The preservation of integrity comes from the fact that the submitter and recipient create PoW hash with same input data and the recipient check that it's the PoW hash matches to the submitters PoW hash.

### DESCRIPTION OF THE INVENTION

The invention is defined in claim 1.

The present invention refers to a method for ensuring the integrity of Proof-of-Work (PoW) in a decentralized network comprising steps wherein a miner submits a PoW hash, a block template and a nonce to a node. The node based on the block template and the nonce received from the miner calculates a new PoW hash and verifies if the PoW hash received from the miner matches the new PoW hash it computed itself. The node checks that the received PoW hash is below or equal to the network's target, and once a valid block is created, the node relays the valid block, along with the received PoW hash, and the nonce to other nodes within the decentralized network where nodes are adapted to verify that the received block PoW hash matches the PoW hash computed by the node.

Preferably instead of submitting the PoW hash, the block template and the nonce to the node, the miner submits the PoW hash, the block template and the nonce to a stratum, the stratum based on the block template and the nonce received from the miner calculates a new PoW hash and verifies if the PoW hash received from the miner matches the new PoW hash it computed itself, and then the stratum submits the PoW hash, the block template and the nonce to the node.

In yet another embodiment the miner submits the PoW hash via a communication protocol compatible with the stratum or the node for validating the PoW hash matches the PoW hashes calculated by stratum or the node.

In another embodiment the PoW hash is transmitted from the miner to the stratum or the node in a manner that preserves the integrity of the submitted PoW hash, preventing tampering during transmission.

Further the integrity of the PoW hash is ensured by maintaining its consistency during the transfer process between the miner, the stratum, and the node.

In yet another embodiment the node that receives a valid PoW hash includes the verified PoW hash into the block, ensuring that the block can be verified by other network nodes by comparing the PoW hash with their own computations.

In another embodiment after verifying the PoW hash, the node propagates the block and PoW hash to other network nodes, which are independently adapted to verify the PoW hash.

Further the PoW hash is verified by nodes according to a hash function consistent with the network's consensus rules, ensuring that only valid PoW hashes are accepted.

In yet another embodiment network node re-verifies the PoW hash upon receiving the block, ensuring no tampering occurred during transmission or processing.

The invention refers also to a decentralized network ensuring the integrity of Proof-of-Work (PoW) with the method according to any of claims 1 to 9.

Further in another aspect the invention relates to a decentralized network ensuring the integrity of Proof-of-Work characterized in that nodes are adapted to verify that the received block PoW hash matches the PoW hash computed by the node.

The present invention introduces a method to improve the security and integrity of Proof-of-Work (PoW) systems in blockchain networks by ensuring the entire computational process is validated, rather than relying solely on the validity of the nonce. In traditional PoW-based systems, miners generate a nonce. Nonce is a numerical value that, when combined with block data and hashed, results in a valid hash that meets the network's difficulty target. The validity of this hash is then verified by other nodes in the network by recalculating the hash using the nonce and confirming that it meets the target difficulty. However, this method is vulnerable to manipulation because it only verifies that the correct nonce produces a valid hash, without independently confirming the steps leading to that hash.

The invention addresses these limitations by offering a comprehensive validation of the entire PoW process, rather than merely validating the final hash through nonce verification. Specifically, it ensures that the miner has followed the correct computational steps and adhered to the proper algorithm throughout the PoW process. This prevents the use of shortcuts or exploits, such as the use of nonces derived from different algorithms, which could undermine the system's integrity.

To achieve this, the invention proposes a method for securely transferring and validating PoW hashes in a distributed network. The solution involves embedding cryptographic proofs within the PoW verification process that make it impossible for an attacker to bypass or manipulate intermediate computations. This is accomplished through an enhanced hash verification protocol that ensures the integrity of the entire computation, not just the final output hash. By incorporating this method, miners are required to prove that they have completed the intended PoW computation, and not just produce a valid nonce using an alternative approach.

Furthermore, the invention aims to maintain transparency and reduce the risk of exploitation by revealing the full computational effort behind the PoW, making it more difficult for malicious actors to manipulate or tamper with the system undetected. It creates a more robust and trustworthy consensus mechanism that is resistant to attacks, such as those where miners use a different algorithm to find valid nonces or otherwise bypass the expected validation process.

This innovation enhances the security of PoW-based blockchain systems by providing a method that prevents the exploitation of nonce validation vulnerabilities, ensuring that the full computational effort behind each block is genuine. The invention, therefore, increases the reliability and robustness of blockchain networks, protecting them from potential attacks and enhancing their overall trustworthiness.

### LIST OF THE FIGURES

The invention is described in detail below with reference to the accompanying drawings, in which
- Figure 1: shows a distributed blockchain network;
- Figure 2: illustrates mining process ran by the miner;
- Figure 3: illustrates the validation steps performed by the stratum;
- Figure 4: illustrates the validation steps performed by the node;
- Figure 5: illustrates the validation steps performed by the network node.

### DETAILED DESCRIPTION OF THE INVENTION

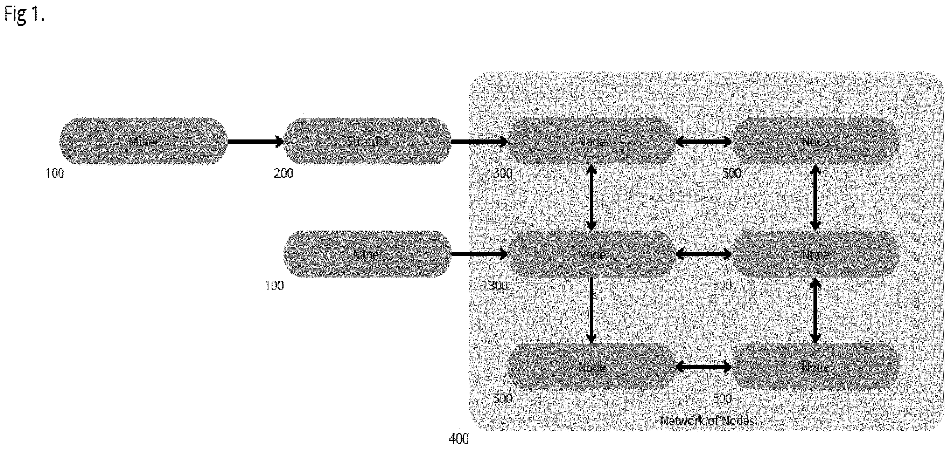

Fig. 1 shows a distributed blockchain network 400 with a miner 100, a stratum 200 and network of nodes 300, 400, 500 with directions for transfer of PoW hash so that it propagates in the network 400.

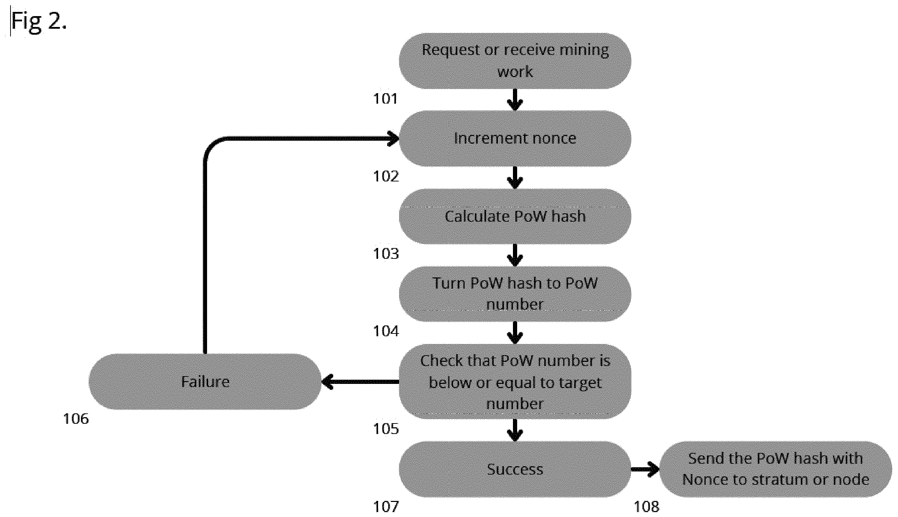

Fig. 2 shows the miner 100 sending the PoW hash 108 with the nonce and block template to the stratum 200 or node 300.

The miner receives mining work or request for mining work in step 101 and then begins solving the cryptographic puzzle by incrementing the nonce 102 and calculating the PoW hash 103. Next it calculates PoW number 104 in order to check PoW number with the target criteria in the next step 105. The PoW Number is the PoW hash turned as a Big Integer so that it can be compared to the be less than or equal to the Pool or Network target. The target is Big Integer number. Using the PoW Number is only an example of a target criteria, which is particularly computational effective, other criteria can be applied to verify PoW done by the Miner as the format of the hash calculated e.g. stating from a certain number of zeros or ones.

If the PoW number is not matching the target criteria, the miner 100 returns to the beginning of the process in step 106, increment the nonce 102 and continue mining. Miners 100 execute the PoW algorithm 103, until they found a nonce that produces a PoW hash meeting the target criteria set by the network. The miner 100 submits 108 the PoW hash, along with the nonce and block template, to a stratum server or directly to a node only when the PoW number meets. If the PoW algorithm fails 106 and does not generate PoW hash and PoW number that is below or equal to pool or network target, the miner will restart the loop because of failure in finding valid nonce.

Once the stratum 200 or node 300 receives the PoW hash, they turn the PoW hash into the PoW hash number and check that is below or equal to the target.

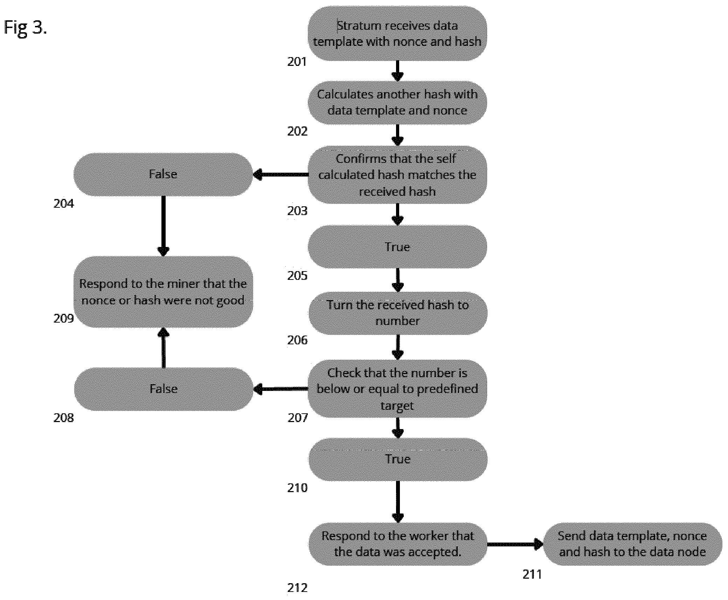

Referring now to Fig. 3 shows the validation process, where the stratum 200 after receiving the PoW hash and nonce 201 from the miner 100, and before submitting the PoW hash and Block template with nonce 211 to the node 300. In a preferred embodiment of stratum 200 recalculates the PoW hash in the step 202 using the PoW algorithm with the submitted nonce and block template, afterwards verifying that the self-calculated PoW Hash matches the miner's submitted PoW hash in the step 203 and that the PoW hash turned into Big Integer is below or equal to the network target in steps 205, 206, 207. Upon successful verification 207, 210, the stratum 200 forwards the block to a node 300. Upon failure of verification in the step 208 or the step 204 the stratum 200 cannot accept the block and, the stratum 200 can ban the miner for submitting incorrect PoW hash in the step 209.

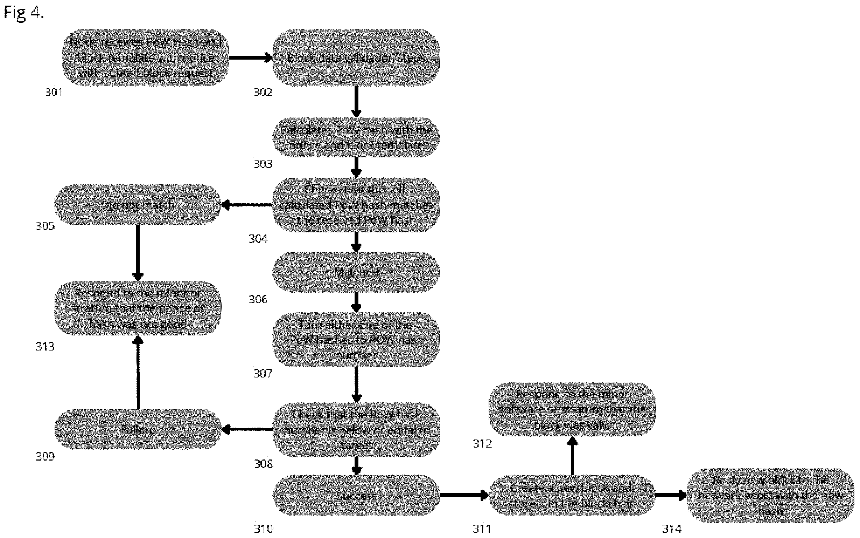

Fig. 4 the validation process run on the network node 300 after receiving the PoW hash and nonce in step 301 in a submit block request, and before relaying the block 311 to its peer nodes in the network 400. Referring now to Fig 4. In a preferred embodiment the node perform the block data validation step 302 and then performs its own validation by recalculating the PoW hash 303, ensuring it matches the submitted hash in the steps 304, 305 or 306. Afterwards it is turning the PoW hash into PoW number in the step 307 and checking that PoW number is below or equal to the network target in the step 308. If these and other block creation requirements are met the process follow steps 310 and 311, the node adds the block to the blockchain in the step 311 and relays it to its peers in the step 314. If they are not met the path by the step 309 the node can ignore the block and ban the miner or stratum for submitting incorrect PoW hash in the step 313.

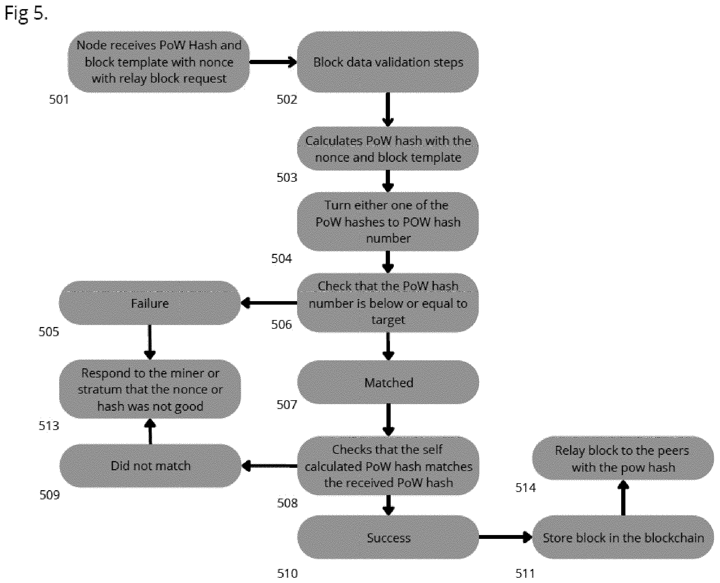

Fig. 5 illustrates the process at network node 300 after receiving the PoW hash and nonce in a step 301 in a relay block request, and before relaying the block in step 311 to its peer nodes in the network. Referring now to Fig 5. in a preferred embodiment each peer nodes receives PoW has and block template with nonce in step 501 and validates the block in the step 502, further verifies the block by recalculating the PoW hash in the step 503 and validating the nonce in the step 504, 506. If verification fails the nonce and received PoW hash do not comply with target the process follows the path via the step 503 and the block is returned and the miner is banned. Once confirmed if PoW hash number is below or equal to target in the step 506 and self-calculated PoW hash matches received one in the step 508, the block is added to their local blockchain in the step 511 and propagated further across the network in the step 514, and if they cannot confirm that the self-calculated PoW hash matches the received PoW hash the process proceed with the step 509 and 513 they can ban the peer which submitted the incorrect PoW hash.

The present invention proposes a groundbreaking approach to improving the security and integrity of Proof-of-Work (PoW) mechanisms in blockchain networks. It addresses critical vulnerabilities in existing nonce-based validation systems by ensuring the validation of the entire computational process, not just the nonce. This approach enhances the robustness, transparency, and security of decentralized systems by verifying that all computational steps are correctly executed according to the prescribed PoW algorithm.

Current nonce-based validation merely confirms that a given block template and nonce produce a PoW hash equal to or below the target threshold. However, this process fails to verify whether the miner followed the correct computational steps, leaving the system vulnerable to manipulation. For instance, attackers can exploit this weakness by generating nonces using alternative or invalid algorithms while still producing a valid hash. Such exploits undermine the integrity of the PoW process and allow malicious actors to bypass the computational work intended by the network.

As demonstrated with the Pyrinhash V1 and V2 algorithms, it is possible to generate valid nonces using one algorithm while validating them with another. This bypasses the prescribed computational process, compromising the security of the blockchain. Additionally, the current validation system lacks transparency, as it does not reveal the intermediate steps involved in producing a valid nonce. This creates an environment where shortcuts and exploits can occur undetected.

The invention aims to resolve these vulnerabilities by shifting the focus of PoW validation from the nonce alone to the entire computational process. This involves verifying that the miner's calculated PoW hash matches a self-calculated PoW hash based on the submitted block template and nonce. This ensures that miners execute the prescribed algorithm without manipulation or shortcuts. By validating every step of the PoW computation, the invention prevents the use of invalid or alternative algorithms and maintains the integrity of the network.

The validation process unfolds in several stages to safeguard the PoW mechanism:
This comprehensive validation ensures that every participant in the network independently verifies the integrity of the PoW computation. By incorporating the entire computational process into the validation, the invention eliminates the vulnerabilities associated with nonce-based systems. Miners are compelled to perform the intended computations, ensuring compliance with the prescribed algorithm.

The inclusion of PoW hash validation strengthens the consensus mechanism, making it more resistant to attacks and maintaining blockchain integrity. The consistency of data transfer comes from the fact that the submitter and recipient create PoW hash with same input data and the recipient checkthat it's the PoW hash matches to the submitters PoW hash.

Transparency is enhanced by revealing the computational steps behind each PoW hash, fostering trust and credibility among network participants. Secure transfer protocols safeguard the integrity of PoW hashes during transmission, preventing tampering between miners, stratums, and nodes. The decentralized nature of validation, with each node independently verifying the PoW process, eliminates reliance on a single point of failure and increases the network's resilience against attacks.

## Claims

1. A method for ensuring the integrity of Proof-of-Work (PoW) in a decentralized network (400), comprising steps wherein
a miner (100) submits a PoW hash, a block template and a nonce to a node (300);
the node (300) based on the block template and the nonce received from the miner (100) calculates a new PoW hash and verifies if the PoW hash received from the miner (100) matches the new PoW hash it computed itself;
the node (300) checks that the received PoW hash is below or equal to the network's target, and once a valid block is created, the node (300) relays the valid block, along with the received PoW hash, and the nonce to other nodes within the decentralized network (400) where nodes (500) are adapted to verify that the received block PoW hash matches the PoW hash computed by the node (500).

2. The method according to claim 1 wherein
instead of submitting the PoW hash, the block template and the nonce to the node (300), the miner (100) submits the PoW hash, the block template and the nonce to a stratum (200),
the stratum (200) based on the block template and the nonce received from the miner (100) calculates a new PoW hash and verifies if the PoW hash received from the miner (100) matches the new PoW hash it computed itself, and
then the stratum (200) submits the PoW hash, the block template and the nonce to the node (300).

3. The method of claim 1 or 2, wherein the miner (100) submits the PoW hash via a communication protocol compatible with the stratum (200) or the node (300) for validating the PoW hash matches the PoW hashes calculated by stratum (200) or the node (300).

4. The method of claim 1 or 2, wherein the PoW hash is transmitted from the miner (100) to the stratum (200) or the node (300) in a manner that preserves the integrity of the submitted PoW hash, preventing tampering during transmission.

5. The method of claim 1 or 2, wherein the integrity of the PoW hash is ensured by maintaining its consistency during the transfer process between the miner (100), the stratum (200), and the node (300).

6. The method of claim 1 or 2, wherein the node that receives a valid PoW hash includes the verified PoW hash into the block, ensuring that the block can be verified by other network nodes by comparing the PoW hash with their own computations.

7. The method of claim 1 or 2, wherein after verifying the PoW hash, the node propagates the block and PoW hash to other network nodes, which are independently adapted to verify the PoW hash.

8. The method of claim 1 or 2, wherein the PoW hash is verified by nodes according to a hash function consistent with the network's consensus rules, ensuring that only valid PoW hashes are accepted.

9. The method of claim 1 or 2, wherein network node re-verifies the PoW hash upon receiving the block, ensuring no tampering occurred during transmission or processing.

10. A decentralized network (400) ensuring the integrity of Proof-of-Work (PoW) with the method according to any of claims 1 to 9.

11. A decentralized network (400) ensuring the integrity of Proof-of-Work (PoW) **characterized in that** nodes (500) are adapted to verify that the received block PoW hash matches the PoW hash computed by the node (500).
